# EUROPEAN PATENT SPECIFICATION

(11) **EP 1 420 591 B1**
(45) Date of publication and mention of the grant of the patent: **07.06.2006**
(21) Application number: 03027757.8
(22) Date of filing: 23.12.1999
(51) Int. Cl.: H04N 7/173, H04N 5/445

(54) **Electronic programme scheduling system**
Elektronisches Programmablauf-System
Système électronique de planification de programmes

(30) Priority: 23.12.1998 GB 9828591
(43) Date of publication of application: 19.05.2004
(62) Divisional of application: 99962448.9
(73) Proprietor: NTL Group Limited, Hook, Hampshire RG27 9XA (GB)
(72) Inventor: Lang, Jack Arnold, Cambridge, Cambridgeshire CB3 7NU (GB); Strick, Michael, NTL House, Hook RG27 9UP Hampshire (GB)
(74) Representative: Martin, Philip John

(56) References cited:
- WO-A-97/49237
- US-A- 5 418 782

## Description

The present invention generally relates to systems for the management of programmes for home entertainment devices such as televisions. More particularly it is concerned with apparatus, methods and software for scheduling such programmes.

Until recently conventional televisions have been able to receive only a relatively limited number of channels of programmes. Typically terrestrial television broadcasting has provided 4 or 5 channels, satellite broadcasting of the order of a dozen channels and cable television broadcasting a few tens of channels. With the advent of new forms of programme delivery such as digital terrestrial television (DTT), digital satellite television, web casting - delivery of programmes over the Internet - video on demand (VOD) and/or near video-on-demand (NVOD) the number of available television channels is predicted to grow dramatically. Consumers will be able to choose from many thousands of programmes or programme clips, which could include daily video magazines, regularly updated news from hundreds of sources around the globe, music tracks and videos, games and films. Newer PC-TVs and set-top-boxes (STBs) have the ability to store programmes on an internal hard disk for viewing later and to access web-cast video over the Internet, as well as having the capability to receive many hundreds of channels of broadcast material and NVOD movies. Thus consumers will be faced with an overwhelming choice of viewing.

Television viewers exhibit both "push" and "pull" behaviour. In push behaviour a passive viewer selects a channel, typically by editorial style much as one might choose a newspaper, and is essentially passive thereafter. Pull behaviour is where a viewer deliberately chooses or "pulls" a desired programme, for example a video, soap, sporting fixture or well-advertised/trailed programme. Viewers may even pay for such material. However, in both cases the viewer is making a choice from a small number of alternatives. When the choice becomes too great the viewer easily becomes confused and will typically ignore much of the material on offer by restricting viewing to a few familiar channels.

An electronic programme guide (EPG) is, generally speaking, an application resident on a set top box designed to aid the viewer in the navigation of and selection from broadcast material available in a digital TV environment. Conventional electronic programme guides (EPGs) are of little assistance when the number of channels or viewable entries becomes large. The choices available to a viewer become too many to fit on a single page or on few enough screens to be understandable. Channel surfing is also difficult because of the difficulty in remembering what is being broadcast on the sampled channels. With 500 channels, it would take 83 minutes to glance at each channel, allowing 10 seconds per channel.

EP-A-0 838 915 describes a digital broadcasting system using virtual channels in which broadcast transport streams include channel mapping information, but the system lacks an EPG display. WO 96/17467 describes a system and method for scheduling broadcast of and access to video programmes and other data using customer profiles. The '"virtual channels" described therein are generated at a video head-end and there is no means to download a "virtual channel" schedule from the head end to the customer's set top terminal; instead the publication teaches providing a virtual channel by using one head-end channel for each scheduled video programme. US 5, 534,911 describes an apparatus for providing a customer of a television system with a virtual personal channel but presents menu options and choices rather than a channel schedule as such. WO 96/41477 describes an electronic television programme guide schedule system and method including virtual channels but the "virtual channels" of this publication are not schedules of programmes selected from a plurality of real channels but are instead a complete mapping of a full real channel schedule (as described at page 47). WO 95/19092 describes a consumer interface for a digital television system in which a controller selects a "virtual channel" which is subject to reassignment to one of a plurality of digital data transmission channels. Thus, a virtual channel may provide bandwidth for a sporting event or for two movie channels giving a user the perception that he has more channels than in fact can be supported simultaneously by the available bandwidth - this publication's concept of a "virtual channel" is that of time-multiplexing the system bandwidth. WO 94/29811 refers to a "virtual channel" which is a text channel transmitted in the vertical blanking intervals of cable television channels. US 5,841,433 again describes a system in which complete channels are mapped. WO 97/49237A describes a system and method for displaying an electronic programme schedule guide. A distribution centre compiles data for a data-stream including television schedule information and the data-stream is broadcast to receiving locations. The database is built by receiving messages comprising discrete commands but the publication does not teach compiling a database from information accessible via web pages. Further background information can be found in WO 97/42763, US 5,781,246 and EP-A-0 671 861.

We will describe systems and methods for alleviating these problems by providing a more intelligent "electronic programme guide" which incorporates a concept of a virtual channel to assist in choosing between sources of programming. The advent of intelligent television receivers and set-top boxes (STBs) with inbuilt storage and processing power allows intelligent switching of channels between and within TV programmes. These developments have the potential for a radical effect on the TV paradigm, and in particular negate the assumption that the passive viewer is captured by a particular broadcasting channel.

In particular we will describe a system, and a corresponding method, for providing a home entertainment device with a virtual channel, the virtual channel comprising a schedule of programmes and corresponding start times, the programmes being selected from programmes available from a plurality of real channels and/or other programme sources, the system comprising:
schedule input means to receive virtual channel schedule information comprising, for each scheduled programme, programme start time information and information identifying a real channel or programme source from which the programme is available at that start time;
schedule information storage means;
schedule display means to display a stored schedule;
control means to control a programme reception device using the virtual channel schedule information to select and receive, at the scheduled start time, the real channel or programme source corresponding to the scheduled programme; and
output means to provide scheduled programmes thus received to the home entertainment device such that the virtual channel is selectable by a user of the home entertainment device in a similar way as a real programme channel. Preferably the home entertainment device is a television, and the virtual channel is provided by a set top box (STB).

This extends the "pull" metaphor by introducing a level of indirect reference in the form of the notion of a "virtual channel" made up of pre-selected programmes and other material. Such a selection may have been made by, for example, an editor, from the programmes scheduled on multiple real channels and other sources, and the suggested "virtual channel" viewing schedule published electronically, for example on a Web page.

A virtual channel is essentially a series of programmes from diverse sources intended to be shown in succession. More particularly, in one embodiment a virtual channel comprises of a schedule of material from any available broadcast channels, individually chosen by a user, TV critic, advertiser or other person. The set top box automatically re-tunes to each broadcast channel as required, providing the effect of a single channel.

The system allows a user to download and/or generate a virtual channel or channels comprising a sequence of programmes from multiple programme sources, chosen according to the user's taste or specifications. This helps to simplify the user's choices by changing emphasis from a broadcast model to a "virtual channel model". It thus allows the user to choose between a small number of more attractive options.

The system is preferably further comprises schedule storage means in the set top box and communication means to download a virtual channel schedule and/or channel definition parameters from a remote source. This allows download of, for example, an "Editor's recommendations" or "Critic's choice" channel for example published electronically by a newspaper or magazine.

The system may be configured to schedule a plurality of virtual channels for the user. Thus a user could set up channels such as "My sport's channel", "My movie channel", "My gardening channel" and "My news channel", and "surf' between them as if they were broadcast channels. The apparatus is preferably controllable to restrict selectable virtual channels to those associated with a particular current user, thereby embodying a concept of personal channels. As the user is identified, channel choice can also be restricted by parental or other control, for example to screen out programmes with violent or adult content. Virtual channels can also thereby be suggested for a user. Preferably a portion of virtual channel schedule is definable for replacement by a schedule of a broadcast television channel. This allows the virtual channels to map to and include broadcast channels, by the use of suitable criteria, for example, "Programmes from BBC1".

Advantageously programmes for scheduling include VOD and NVOD video and programmes available via the Internet, that is web-cast stations. Preferably the system further comprises programme reception and storage means so that the programmes for scheduling can include stored programmes. This develops the basic concept of time-shifting programmes and provides further flexibility within the virtual channel schedule. It also allows programmes which overlap in time to be scheduled. Advantageously the scheduling is operable automatically based upon collected user preference information.

The system may comprise means to suggest a virtual channel schedule in response to stored user characteristics. This allows the suggestion of virtual channels likely to be of interest to the user, further simplifying choice. The system may be still further operable to communicate with remote users of other similar system to allow at least a portion of a virtual channel schedule and/or parameters to be transmitted or received. This allows virtual channel descriptions to be read from and written to others, for example, via the Internet, so that they may be exchanged between friends.

The database preferably comprises, in addition to input from a normal programme information feed, Internet web-spider search means to retrieve programme schedule information from the Internet and add it to the database. This provides a convenient method of collecting and collating data from a wide variety of rapidly changing sources.

Thus the invention provides a method using a computer of gathering information for a programme database for use in scheduling a virtual channel, the database comprising programme information for a plurality of programmes, including for each programme the programme start time, a real channel or programme source the programme is available from at that start time, and programme identification information; the method comprising automatically performing the following steps in sequence:
i) accessing a web page;
ii) storing the web page's uniform resource locator address;
iii) searching the web page for information identifying a programme suitable for scheduling on the virtual channel and, if found, retrieving programme information for the programme, and adding the programme information to the programme database;
iv) identifying a hypertext link from the web page to a new web page or, if none, returning to a previous web page until a link to a new web page is found; and
v) accessing the new web page and repeating steps (ii) to (iv).

Aspects of the invention will now be described, by way of example only, with reference to the accompanying drawings in which:
Figure 1 shows a block diagram of a system according to an embodiment of the present invention;
Figure 2 conceptually illustrates the concept of a virtual channel;
Figure 3 shows a simple example of an on-screen electronic programme guide for a virtual channel;
Figure 4 shows a relational database for storing programme data;
Figure 5 shows a simple example of a user interface for searching the database of Figure 4;
Figure 6 shows a block diagram of software modules for an electronic programme scheduling system;
Figure 7 shows, schematically, parts of an exemplary user interface; and
Figure 8 shows, schematically, parts of another exemplary user interface.

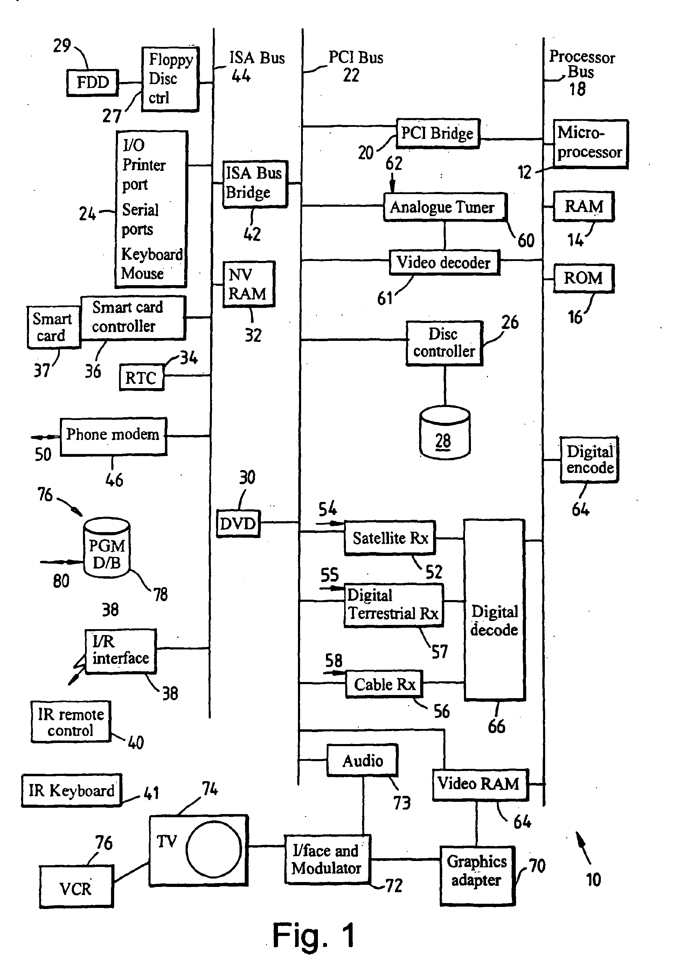

Figure 1 shows one example of a system which is suitable for providing a home entertainment device, such as a television, with a virtual channel. Logically the system is located between a programme source such as a terrestrial television programme transmitter and a television receiver; physically it may be incorporated within a television set. In outline the system is based upon hardware corresponding to a conventional personal computer system with the addition of components for television programme reception and processing and modifications to enable the computer to be embedded in a conventional set top box (STB) with infrared remote control. Much of the functionality is provided by firmware stored in read only memory (ROM), although the program could be stored on hard disk, where the STB is so equipped, and executed from random access memory (RAM). The configuration of the computer system can be varied to suit the level of desired functionality. The illustrated system is suitable for a processor which performs multimedia operations (such as a Pentium with MMX) but a simpler microcontroller could be used and the basic functionality required of the system could even be provided by dedicated hardware. The skilled person will recognise that many variations to the illustrative hardware can be made according to cost, component availability, system functionality and other considerations. Although the system will be described as providing programmes to a television, it is suitable for use with any home entertainment device such as a VCR or DVD recorder and, in general, any programme receiving device.

In Figure 1 the set top box is generally illustrated at 10 and comprises a microprocessor 12 coupled to random access memory (RAM) 14, ROM 16 and peripheral component interconnect (PCI) bridge 20 by processor bus 18. ROM 16 holds system BIOS (Basic Input Output System) and operating software, the BIOS interfacing between the operating software and the STB hardware. If desired, the BIOS ROM can instead be coupled to the processor via the low speed ISA bus 44. PCI bus 22 is driven by PCI bridge 20 and is suitable for high speed data transfer although it is slower than processor bus 18. Optionally, hard/floppy disk controller 26 and disk drive 28, and digital versatile disk (DVD) drive and controller 30 are coupled to the processor via the PCI bus 22. To the ISA bus is attached non-volatile RAM 32 for storing, for example, user input information; real time clock 34; smart card interface 36 for smartcard 37 and infrared control link device 38. Commands are issued to the set top box by the user using a hand held infrared remote control unit 40 or infrared keyboard 41 which communicates with control link device 38.

Industry standard architecture (ISA) bus 44 is coupled to PCI bus 22 by ISA bus bridge 42. The system is preferably provided with means to receive television programmes from a variety of sources such as broadcast programmes from satellite, cable and conventional terrestrial transmitters, video or near-video-on-demand (both referred to as NVOD) sources, and Web cast programmes from Internet-based sources. However, a simplified system may lack such receiving means and may instead control the television to display a desired programme, for example by transmitting infrared commands to the transmitter as though it were the television's remote control device; in this case IR module 38 may also be an IR transceiver.

In Figure 1, conventional tuner 60 has input 62 coupled to a terrestrial television aerial to receive terrestrially broadcast programmes; cable television receiver 56 has input 58 coupled to a cable TV network; satellite receiver 52 has input 54 coupled to a satellite receiving dish; and digital terrestrial receiver 57 has input 55 from a suitable terrestrial aerial. Telephony modem 46, which may be a cable modem, or an International Subscriber Digital Network (ISDN) or an asymmetric digital subscriber line (ADSL) modem (or any suitable digital subscriber line device) is coupled to telephone line 50 to receive VOD/NVOD programmes. Digital programme receiving devices have their digital information stream output coupled to decode unit 66 (audio paths are not shown in Figure 1), which is also coupled to ISA bus 44 or PCI bus 22.

Television programmes may have associated data streams and the programme receiving means are therefore preferably provided with means to receive data and/or to extract data from received video signals which can, for example, be included in the vertical blanking interval (VBI) of a television signal. Since the ADSL connection provides a data channel, this can also be used for data communications. Such connections allow the system to handle data casting and to extract programme data such as broadcast channel identification information, time and date information and subtitles.

The apparatus is preferably configured to view programme video information and simultaneously browse the Web and carry out Web related activities, for example downloading software or information.

An audio and motion video compression module 64 is also coupled to bus 18 and may also be implemented in software. Data may be input to this to allow broadcast programmes to be recorded locally and made available for later viewing. The video data is compressed according to a standard format such as MPEG, Real Media or H323 and then stored as a compressed file on disk. Module 66 also includes corresponding decoding means to decompress the compressed video and audio. Optionally, the video compression and decompression can be performed by processor 12. The system is preferably operable to concurrently store a received programme and to play a stored programme by, for example, interleaving write and read-erase access cycles to the storage module's disk drive.

A video output carrying programme information, is coupled to the television via graphics adapter/video signal combiner 70 and modulator 72. If the television has a direct video input, modulator 72 may be omitted and the television 74 may be connected directly to video output via a SVGA socket, a SCART socket, S-Video socket, RCA phono plugs or other well known interfaces. Video RAM 70 is connected to the processor bus 18 and allows the system to generate graphics and combine them with the digital signal from video decode 66, for example using overlay or picture-in-picture modes, and can also output a video signal without any additional graphics. The system is configured to directly overlay text and/or graphics onto programme video and to achieve a similar result by overlaying a sparse Web page. This information can, for example, be used to provide further information about the programme or channel currently being viewed, for example information on "What's on next".

The system also includes an event detector module implemented in software to detect events in a programme video stream such as programme breaks within and/or between programmes. Such breaks or interruptions can be caused by commercial advertising or the interruption of other programmes for example news programmes. For example, in the U.K. a pair of vertical bars appears in the top right hand corner of the picture frame as a video switching mark shortly before a commercial break and the event detector is configurable to provide the video decode responsive to programme break detection. For digital transmissions, appropriate digital descriptor information is used to detect programme change.

Events can be determined by absolute and/or relative times, for example "at 10 p.m." or "five seconds after the start of the BMW (Registered Trade Mark) advert". Events, and the systems response to them, can be defined by extensions to HTML information associated with the relevant programmes. For example, in accordance with the recommendations of the Advanced Television Enhancement Forum (ATVEF) recommendations on proposed HTML extensions. The events and responses can also be transmitted in-band, for example in the VBI as a subtitle (the US EIA 746 standard) or in a digital video stream as a subtitle or as a separate event object in the data carousel, or even can be separately input via some other online connection.

The system is preferably equipped with bi-directional communications, so that information can be both received from and transmitted to remote apparatus. Thus cable receiving means 56, phone modem 46 are preferably all operable to transmit data as well as to receive programme and data information. Thus conventional Web-browser software in firmware may be employed to allow a user to interact with Web pages via the Internet, for example using IR remote control 40 to select hypertext links on Web pages displayed to the user by graphics adapter 70. Programme descriptor information can be displayed with selectable/clickable extensions and, more generally, Web-based electronic programme guide (EPG) information can be displayed. Although the operating system software has been described as being stored in ROM, it may be stored in non-volatile memory such as FLASH memory (EEPROM) whereby the system can be updated by downloading new software over one or other of the communication links, either when it becomes available or when a user pays to upgrade the system.

Also shown in Figure 1 is a database 76 remote from the set top box and comprising database storage means 78 and bi-directional communications link 80 for communication with the set top box (STB). Although shown remote from the apparatus, the programme database may be incorporated within the apparatus either in memory or on the local hard disk and generated from broadcast programme information. The database is provided with a software interface based on a standard protocol such as ODBC (Open Database Connectivity), for connection to other elements of the system. Again, although the database is illustratively shown as a unitary structure it could also comprise information held in a large number of disparate sources, for example electronic programme guides at various different Web page URL's. A further alternative is that the database is held remotely, as illustrated, with a copy of the database held locally in the set top box, for example, on disk or in the NVRAM and periodically updated by file transfer, for example, by telephone dial-up on demand or at a fixed time daily or by data insertion in the broadcast signal, for example overnight in in-band data such as VBI inserted data for analogue TV or as part of the data carousel for digital TV. Communication with the database can be by any conventional means, for example by phone modem 46 and/or a copy or partial copy of the database can be downloaded to the STB using the satellite 52, digital 57 and/or cable 56 receiver(s). The information held in the programme database is described in more detail below.

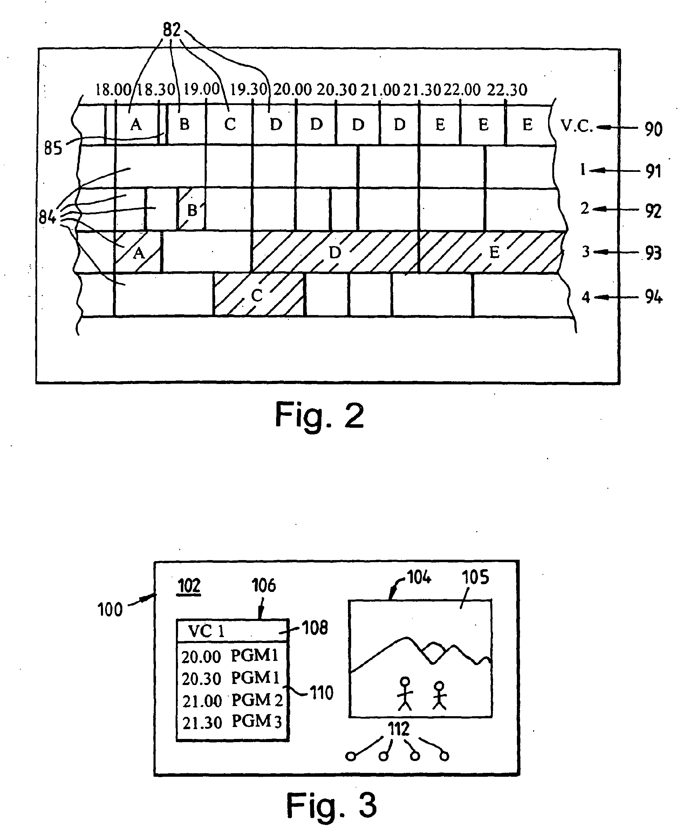

A virtual channel is a schedule of programmes which have been selected from programmes available from real channels or other programme sources (for example, Webcast programmes). The schedule is made up by selecting programmes from a variety of channels for showing in, preferably, defined time slots in the virtual channel. The concept of a virtual channel is illustrated diagrammatically in Figure 2. Figure 2 shows a virtual channel schedule 90 and schedules for four real channels, 91, 92, 93 and 94. The real "channels" may include cable, satellite, terrestrial and Web-cast television channels and NVOD programmes.

Illustratively the virtual channel 90 has a template structure with notional divisions at half hour intervals defining half hour time slots 82 for programme scheduling. Time slots of other lengths can also be defined and, more generally, a flexible structure can be adopted in which the time slots are of varying length, preferably with start and end times corresponding to start and end times of programmes on a real channel(s).

The real channels have programmes 84 of variable start time and duration scheduled as shown. In the illustrated example, the virtual channel schedule comprises five programmes, A, B, C, E and E during the interval 18:00 hours to 22:30 hours. Programme A is scheduled to occupy the slot from 18:00 hours 18:30 hours on the virtual channel; it is available on real channel 93 during the same interval and therefore a system for providing the virtual channel must select programme information from channel 93 for output during this time period.

The second time slot in the virtual channel begins at 18:30 hours and programme B, available on channel 92, is schedule for this time slot. Programme B ends at 19:00 hours, which corresponds with the end of the time slot on the virtual channel, but it starts after 18:30 hours, leaving a gap 85 in the virtual channel schedule. This gap may be filled either by programme material from channel 93 following programme A or by programme material from channel 92 preceding programme B, or by a supplementary programme material. Such supplementary material may comprise advertising from a standard source, material from a source defined by the virtual channel schedule information, or material from a source automatically chosen by the system according to available information (such as information describing the programmes in the virtual channel schedule or information describing or characterising a system user or user preferences). It may include material previously recorded on a local storage device. Since, by definition, VOD programmes are effectively available on-demand, gaps and overlaps in the virtual channel schedule can be adjusted by adjusting the start time of VOD programmes in the schedule.

Programme C from channel 94 is scheduled for the third illustrated half-hour time slot on the virtual channel, and programme D from channel 93 is scheduled for the following four time slots. It can be seen that programmes C and D overlap and, in the illustrated example, programme D has taken priority over programme C in the virtual channel schedule. Programme overlaps can be handled either by manually choosing which programme takes priority, or by pre-programmed rules. For example, the earlier or the later programme may always take precedence or rules can depend upon programme related information such as programme genre which allows rules such as "movies take priority over news" to be defined. In a preferred embodiment the system has a basic set of in-built rules which can be modified by the user.

As described above, when the set top box includes means to receive more than one programme at once and when it includes motion video storage means, overlapping programmes such as C and D may be scheduled at different times or to run consecutively. For example, programme C could be scheduled for both slots between 19:00 hours and 20:00 hours then, whilst, from 19:30 onwards C is being provided to the television, the initial half hour of D is recorded, and then after 20:00 hours the initial part of D is output to the television whilst the later part of D is concurrently recorded. This concurrent playback and recording is continued to move the end of programme D and the start of programme E to approximately 22:00 hours. The system is operable in a similar way to prevent a virtual channel schedule being disrupted by a programme which is broadcast at a later time (or an earlier time) than that at which it is initially described as being available. The actual broadcast time of a programme can be determined by video stream events and/or from data downloaded by the system and by concurrent recording and playback the whole schedule can be shifted back in time until a suitable gap or lower priority programme is encountered.

If desired, more than one consecutive programme from a real channel can be scheduled on the virtual channel, and in this case it is convenient to provide means whereby a user can map a portion of virtual channel 90 to a corresponding portion of a real channel. It is preferably also possible to fully map the virtual channel to a real channel so that, for example, virtual channel 90 may be defined as identical to real channel 93.

Although the scheduled entities have been referred to as programmes (multimedia, video, or audio), other similar entities such as computer games, computer based learning activities and interactive telecommunication events may also be scheduled.

The information defining the virtual channel schedule comprises, at its most basic, an ordered list of programme entities. Associated with each entity is information specifying a real channel or other programme source, including other virtual channels, from which the channel entity is available. Preferably the virtual channel schedule information comprises, for each scheduled programme, information identifying the start time of the programme as well as information identifying a real channel on which the programme is available at that start time. Programme duration information may also be included. In the case of NVOD programmes the "real channel" information comprises NVOD programme source information.

The operating software in the ROM 16 of the set top box uses information defining the virtual channel schedule to control the set box top to provide the set scheduled programmes to output 74 to the television at the correct times. At a programme start time processor 12 selects the appropriate programme input means and real channel and logically couples the video stream to output 67 or the video switch and thence to the output 74 of the set top box. The video output is provided to the television so that the output video stream can be selected in the same way that other real channels on television are selected. In one embodiment the modulator 72 provides a UHF radio frequency output to the television and when the television is tuned to this frequency the programmes scheduled on the virtual channel are provided so that to a user the virtual channel is selectable so that it appears to another real channel.

Figure 3 shows a simple exemplary screen display 100 presented to the television user when the virtual channel is selected. The display comprises a background region 102, which may be plain or which may include logos and/or advertising material, and a picture-in-picture region 104 in which a currently selected video stream 105 is displayed. A programme information region 106 is provided with a header bar 108 identifying the currently selected virtual channel and a programme guide region 110 displaying a list of programmes and times. Predefined or soft menu buttons 112 are also provided for control of, *inter alia,* scheduling and electronic programme guide functions.

Screen display 100 may be downloaded as a Web page or may comprise locally generated graphics or may be a combination of these; if display 100 is a Web page, screen regions such as menu buttons 112 may include hypertext links to other Web pages. In a preferred embodiment, selecting region 108, for example by clicking on the region with a pointer, displays a list of channels including real and virtual channels; selecting region 110 changes the display of programme information, displaying programmes at other times and/or further information on a selected programme; and selecting region 105 expands the video to fill the screen.

The system includes input means to receive information, as described above, defining the virtual channel schedule. In a simple system, the input means comprises a communications device such as phone modem 46 or cable receiver 56 together with a software driver operating together to allow a schedule to be downloaded from a remote location such as a critic's choice Web page thus a user could, for example, download a newspaper's recommended choice of viewing for the evening. Smart card interface module 36 can similarly be used to load virtual channel schedules from a user's or a published Smart card (i.e. a card incorporating a silicon chip data storage module).

Preferably the operating software includes software to allow a user to define a virtual channel schedule. For this mode of operation the system includes an interface means (hardware and/or software) to communicate with the programme database, as outlined above. To allow user scheduling of programmes the database must include programme time and channel information needed to construct the virtual channel schedule as well as information identifying the programmes to be scheduled, for example programme titles.

The database may be held locally or remotely from the apparatus, for example at a regional head-end delivery point. In cable systems with a permanent connection normal remote access protocols can be used to download the data via some out-of-band data path, for example using a cable modem. Alternatively, both a local and a remote database can be used, with the local database as a mirror of the remote master database.

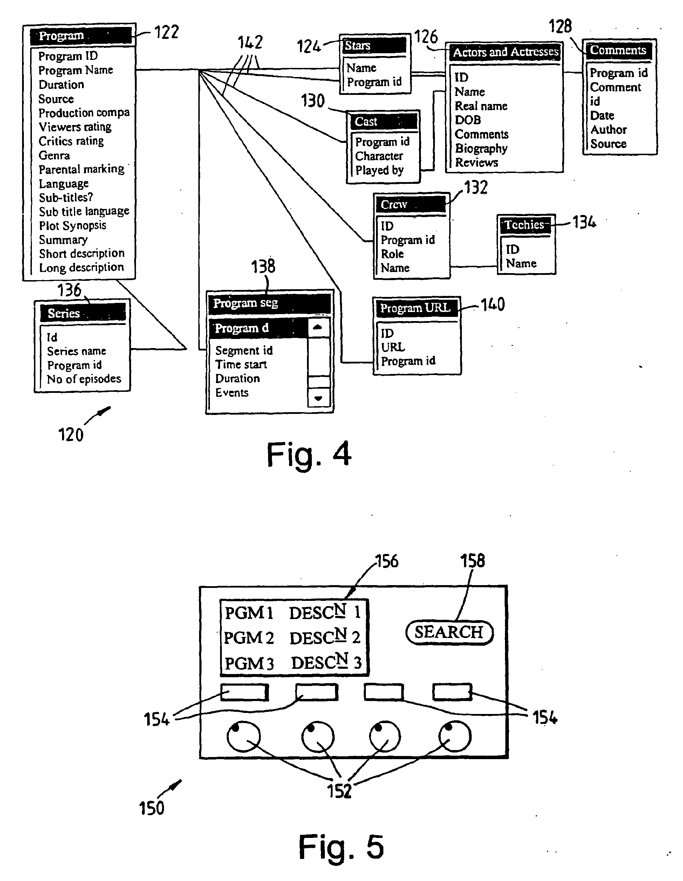

To allow the user to make an informed choice of programmes for scheduling the database preferably also comprises programme descriptor information characterising the content of the programmes in the database so that the user can search the database for programmes of a desired type or having specific features. Figure 4 shows an example schema 120 for a relational programme database. Associated with each programme in a "programme" table 122 are programme I.D., programme name, duration, source, production company, viewer's rating, critic's rating, genre, parental marking (age suitability/certification; violence or bad language; religion; nudity) language, indication of the presence of sub-titles, sub-title language, plot synopsis, summary, short description, long description, and other fields such as producer and director can also be included. Other illustrative linked tables include "stars" 124, "actors and actresses" 126, "comments" 128, "cast" 130, "crew" 132, "techies 134", "series 136", "programme segment" 138, "programme, and URLs" 140 (identifying, for example; an NVOD programme source). The links 142 between the tables in the relational database indicate which tables share data.

The data can be manually entered into the database or derived from a standard electronic programme guide feed or retrieved from broadcasters' or other Web pages using Web-spider search techniques or can be derived from a combination of these sources. If a Web-spider search engine is used, it is desirable that the EPG data to be collected by the Web-spider is published in a standard format so that the information corresponding to the various fields in the database can easily be located.

In an exemplary embodiment the Web-spider (which is essentially a software module) begins at a starting Web page, which may be predefined or manually entered. This page is searched for programme information for the database and for hypertext links to other Web pages, preferably using key words to identify the potentially most useful links. The search engine then either follows a single link to a new Web page where again electronic programme guide data and further hypertext links are gathered, or the software creates two or more separate tasks to follow a plurality of hypertext links simultaneously. In this way EPG data is gathered as the search engine works its way through a tree of hypertext links. When a dead end is reached the search engine works back up the tree until an unused link is found.

Although a notional tree of links is constructed, in reality there is no tree-like hierarchy amongst the Web pages searched and, theoretically, such a strategy allows virtually the entire Web to be searched. If desired, searching can be made more efficient by including a list of URLs or links to pages where it is known that EPG data is located, or to pages which are known to include links to useful EPG pages, and the search engine can be configured to search these first or to search to a limited depth from these predefined pages. Again, the predefined pages can, for example, be manually entered or downloaded from a manually updated source.

An exemplary embodiment of the system includes a user interface for definition of a virtual channel scheduled by the user and/or for tailoring or alteration of a predefined or downloaded virtual channel schedule. Figure 5 shows a simple exemplary screen display 150 for such a user interface, which allows the user to search the programme database according to user defined criteria and to display programmes matching the criteria, either for immediate showing, or for recording for later viewing, or for scheduling on a virtual channel. User interface 150 for capturing the users input and displaying the results, can be a Web-browser extended for TV use, for example in accordance with the recommendations of the Advanced Television Enhancement Forum (ATVEF).

In the example, knobs 152 are used to dial up criteria which appear in display windows 154. Thus a first window may be used to select a genre such as a movie, the second window an associated theme such as "western", a third window, "stars" and a fourth window "John Wayne". A more advanced user interface can also include means to enter key words for word, name, subject, and /or title word searches to allow user for example, to make a request such as "I want to watch gardening programme about heritage tomatoes".

Example search criteria include programme name, star, genre (i.e. programme type such as movie, documentary, news bulletin), theme (e.g. western, comedy, gardening), key words and description, critic's/viewers' ratings, source or broadcast channel (e.g. BBC1), parental guidelines (e.g. "No nudity", or "before 9 p.m."), language.

The system operating software searches the database using standard database query techniques according to the user defined criteria. After the criteria has been dialled-up or entered, a list of programmes and related information (title, time, duration, description etc) appears in window 156 and button 158 can be used for additional searching/programme display.

The system can also include means to identify a current user of the set top box. In one embodiment this is provided by a login screen where a user name and password must be entered before other elements of the operating system can be accessed. Since the system is aware of the user's identity, the viewing and/or scheduling of programmes can be restricted in accordance with the current user. For example, channel descriptor bar 108 in Figure 3 can be selectable to list channels available to a current user. In an alternative embodiment, only one or a few users need enter a password and all the non-password protected users are subject to viewing/scheduling restrictions. This arrangement allows parental control guidelines to be set by a nominated user, such as the account holder, or other users of the set top box.

Parental control may include or exclude programmes with markings that indicate certain categories, such as nudity, violence, religion, bad language, gambling, alcohol or substance abuse, and all set time constraints, for example, "before 9 p.m.", or "not more than one hour per day or five hours per week". This is achieved by storing data linking a user identity (either a specific named user or a class such as "non-password user") with programme channel and/or descriptor information. If a number of virtual channels are shared between a number of users, separate user defined sets of virtual channels may also be specified.

The system may also include input means to receive other user information, in addition to user identity information; this may be stored locally or remotely. In particular, the system is capable of receiving preference information characterising a user's preferred programmes. This can be based on information directly entered by a user or on information characterising the user's history of usage of the system, for example, generalisations using AI (Artificial Intelligence) techniques, based upon locally stored viewing statistics. User entered preference information may describe explicit user preferences (for example, "I like westerns") or may be based upon more general information characterising the user, such as their socio-economic class. Preference information can also be derived from "voting", in which the user specifies programmes which have been enjoyed and/or disliked.

The system software preferably allows a user the option of making a virtual channel schedule available for transmission to a remote destination. This allows targeted marketing by a service provider and the exchange of virtual channel schedules, either explicitly defined or as preference data sets, to be exchanged between users in different locations, for example between friends and neighbours. Preferably schedule information can be downloaded to a Smart card which the user can then carry around, for example to allow the viewing of preferred virtual channels on a hotel television. The Smart card need only carry the user's identity if the user's information is remotely accessible either from a home set top box or from a central database.

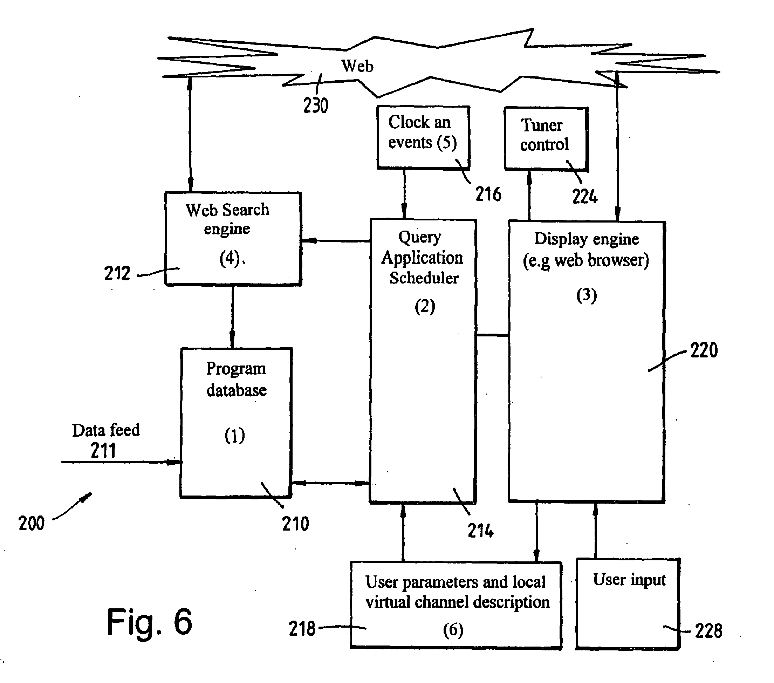

A block diagram 200 illustrating modules of the operating software of the system is shown in Figure 6. Programme database 210 receives data from Web-search engine 214 coupled to World Wide Web (Internet) 230, and also data from data feed 211. Virtual channel scheduling is carried out by scheduler 214, which interacts with programme database 210, and controls Web-search engine 212. This receives inputs from real- time clock and events handling software drivers 216 and user preference information/parameters and virtual channel description data from module 218.

The scheduler 214 also interacts with display engine 220, which controls the display of images on the television, and which preferably incorporates a Web-browser. The display engine interacts with tuner control module 224 to control the programme receiving means to provide programmes to the set top box output. It also receives user input from module 228 for scheduling programmes on a virtual channel and for direct control of programmes provided to the television. Optionally a payment management module is also included to manage subscription payments to allow programme choices to be made from subscription channels, and to periodically download billing data for pay-per-view programmes.

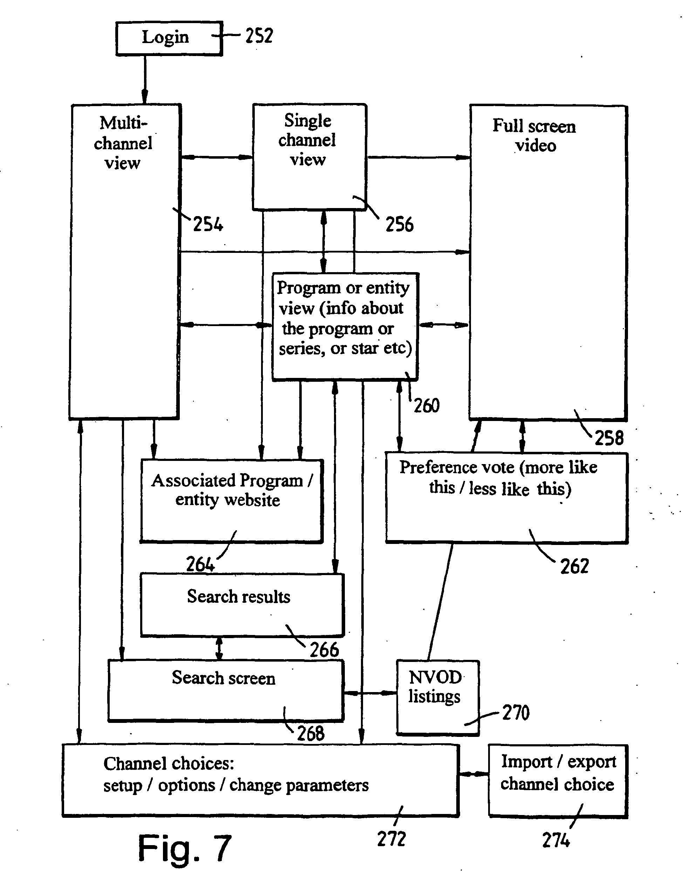

Figure 7 schematically shows elements of a simple exemplary user interface to the system and links between these elements which allow a user to navigate through the displayed menus and screens. The user enters at login screen 252 which, as described above, restricts access to the system. Once the user has successfully logged-on a multi-channel programme display 254 is presented in which the screen is divided into a number of small regions each of which displays a different programme. From this the user may navigate to a single channel view 256 similar to that of Figure 3, in which the user is presented with a single programme in a window on Web page, together with an electronic programme guide providing programme and time information. Selecting the video picture results in full screen video display 258.

From any one of screen displays 254. 256 and 258, additional information about a programme may be displayed - for example, a brief description and critic's comments - in screen view 260. From this screen and from the full screen video display the user can enter preference information and/or vote on screen 262 to indicate that more (or less) programmes of the type displayed are desired.

Associated programmes and/or Web sites providing further information relating to a programme may be accessed from screen 264 via the single 256 and multi-channel 254 view screens and programme information screen 260. Search screen 268 and search results screen 266 may be accessed as illustrated by the links shown, and also from NVOD listings screen 270. Further channel choices, including current user restrictions, user defined virtual channel sets, system set-up options and user parameters may be accessed from screen 272; virtual channel schedules may also be defined from this screen, and user and channel data may be imported and exported via screen 274.

In another arrangement a set top box is equipped with software controlled tuning to generate custom programming taiiored to a user's own preferences. The software may be written in a combination of JavaScript and Perl with server-side Perl scripts representing native applications, allowing JavaScript to access data files on the server through Perl with Perl retaining the data in the form of a JavaScript library file. Alternatively, in a preferred arrangement, rather than spanning a local PC and a server the software is entirely contained within the local STB with only periodic contact to a server to download schedule data. The STB has the capability of including a television window an HTML page for displaying broadcast and locally stored video. The system also has the capability to display a message over the television picture to remind or inform the user that a program in which they are or may be interested is about to start on another channel, to provide a reminder or notification feature. Preferably the STB has access to several hundred real channels.

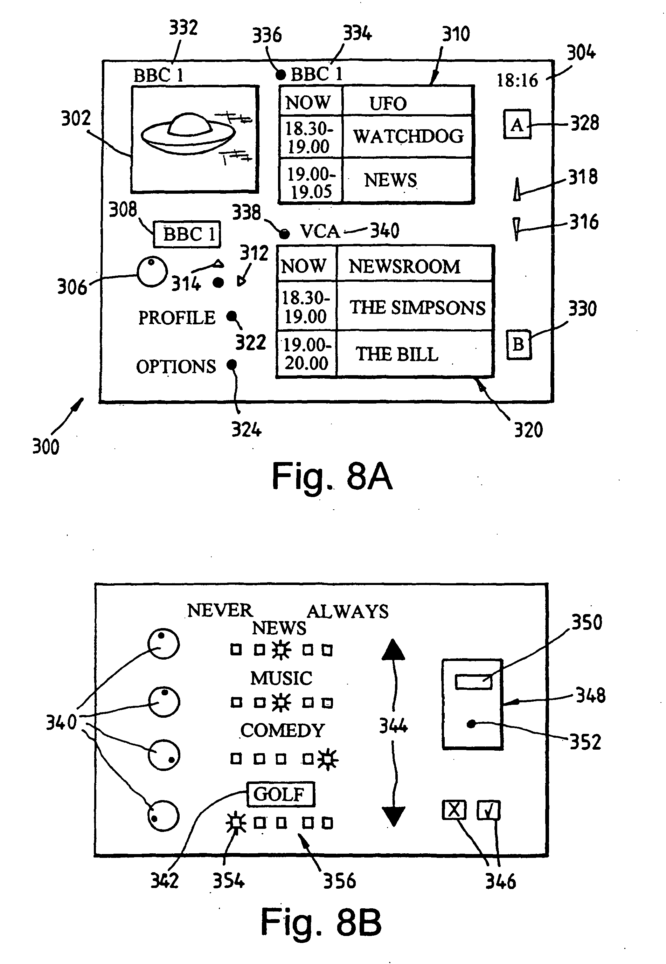

An initial log-on screen is provided to allow a user to identify themselves to the system using a usemame and password. After successful logging the user is presented with a main multi-channel view screen 300 as shown in Figure 8A. This shows a selection of the available channels with an extended now/next 310,320 listing for each. A TV window 302 shows the channel to which the STE is currently tuned and a clock 304 is provided to control time functions such as stating the now/next displays 310,320. The name of the currently displayed television channel is displayed in TV header window 332 and the names of the displayed schedules are displayed in banners 334 and 340. Channel selection control 306 is used to choose a channel, named in window 308, either for display in the TV window, using butter 314 or for display in the schedule listings, using button 312. Additional buttons 322.324 take the user to profile and options screens. Buttons 336 and 338 display an extended schedule listing and/or a full screen TV view. Page-up and -down controls 318.316 move through the displayed channel schedules a block at a time.

Buttons 328 and 330 are labelled with a channel name and when operated by a user load a virtual channel into the EPG. This allows the user to view, for example, a personalised channel designed by another person such as a TV critic to provide a "critics choice" type virtual channel. Once downloaded, a virtual channel is added to the channel list and displayed in schedules windows 310,320 when selected.

Figure 8B shows a user profile screen for defining a user profile which controls the global behaviour of the EPG across all its channels. It is used mainly for enforcing parental control although it may also be used to control the display of any type of material across the whole EPG. The interface includes rotary controls 340 which are used to indicate a preference for a genre or programmes including or described by a particular keyword, as shown in window 342. Controls 344 select user preference setting or options and controls 346 accept or reject changes.

In a preferred system a user profile can only be altered when a parental control lock 348 is unlocked. This requires entering a password in window 350 and operating button 352. The effect of the preference settings depends whether or the settings are positive or negative. Positive settings allow, for example, an indication of the relevance of programmes to the user's profile, in one embodiment using shading by relevance. This causes programmes in scheduling to be shaded from light for highly relevant to dark for irrelevant. Negative settings can also be used for shading by relevance but are preferably also applied to broadcast and virtual channels by blocking access to channels when a programme contains data that is classified as "never", as indicated by illuminated segment 354 on bar 356. Preferably the controls 340 operate with genres by weighting each of a set of predefined (or downloadable) keywords associated with a given genre - for example with "music" including keywords for composers and/or pop groups' names.

Although the device has been described with reference to its use for scheduling television programmes, the system is also suitable for scheduling any type of programme entity, including digital music/audio programmes and computer games. More generally it is suitable for addressing the problems of scheduling any set of programme-type entities given a relatively large number of candidate entities for scheduling.

Many other effective alternatives will occur to those skilled in the art and it is to be understood that the invention is not limited to the described embodiments.

## Claims

1. A method using a computer of gathering information for a programme database (76) for use in scheduling a virtual channel, the database comprising programme information for a plurality of programmes, including for each programme the programme start time, a real channel or programme source the programme is available from at that start time, and programme identification information; the method comprising automatically performing the following steps in sequence:
i) accessing a web page;
ii) storing the web page's uniform resource locator address;
iii) searching the web page for information identifying a programme suitable for scheduling on the virtual channel and, if found, retrieving programme information for the programme, and adding the programme information to the programme database;
iv) identifying a hypertext link from the web page to a new web page or, if none, returning to a previous web page until a link to a new web page is found; and
v) accessing the new web page and repeating steps (ii) to (iv).

2. A method as claimed in claim 1 further comprising providing a plurality of links to web pages predetermined to have electronic programme guide (EPG) data or links to EPG data.

3. A method as claimed in claim 2 comprising accessing the web pages predetermined to have electronic programme guide (EPG) data or links to EPG data before accessing other web pages.

4. A method as claimed in claim 1 or 2 comprising searching web pages predetermined to have electronic programme guide (EPG) data or links to EPG data to a limited depth.

5. A computer programme to, when running on a computer, perform the method of any one of claims 1 to 4.

6. A computer readable medium storing the computer programme of claim 5.

## Patentansprüche

1. Verfahren unter Verwendung eines Computers zum Sammeln von Information für eine Programmdatenbank (76) zur Verwendung bei der Belegungsplanung eines virtuellen Kanals, wobei die Datenbank Programminformation für eine Vielzahl von Programmen umfasst, einschließlich, für jedes Programm, der Programmstartzeit, zu der das Programm zu dieser Startzeit von einem echten Kanal oder einer Programmquelle verfügbar ist, wobei das Verfahren die folgenden Schritte automatisch in einer Sequenz ausführt:
i) Zugreifen auf eine Web-Seite;
ii) Speichern der Uniform Resource Locator-Adresse der Web-Seite;
iii) Durchsuchen der Web-Seite nach Information, die ein Programm identifiziert, das für eine Belegungsplanung auf dem virtuellen Kanal geeignet ist, und, wenn sie gefunden wird, Auslesen von Programminformation für das Programm, und Hinzufügen der Programminformation zu der Programmdatenbank;
iv) Identifizieren eines Hypertext-Links von der Web-Seite zu einer neuen Web-Seite oder, wenn nicht, Zurückgehen zu einer vorangehenden Web-Seite, bis ein Link zu einer neuen Web-Seite gefunden wird; und
v) Zugreifen auf die neue Web-Seite und Wiederholen der Schritte (ii) bis (iv).

2. Verfahren nach Anspruch 1, ferner umfassend das Bereitstellen einer Vielzahl von Links zu Web-Seiten, von denen vorgegeben ist, dass sie Daten für einen elektronischen Programmführer (EPG) oder Links zu EPG Daten umfassen.

3. Verfahren nach Anspruch 2, ferner umfassend ein Zugreifen auf die Web-Seiten, von denen vorgegeben ist, dass sie Daten für einen elektronischen Programmführer (EPG) oder Links zu EPG Daten aufweisen.

4. Verfahren nach Anspruch 1 oder 2, umfassend ein Durchsuchen von Web-Seiten, von denen vorgegeben ist, dass sie Daten für einen elektronischen Programmführer (EPG) oder Links zu EPG Daten aufweisen, auf eine begrenzte Tiefe.

5. Computerprogramm, um das Verfahren nach irgendeinem der Ansprüche 1 bis 4 auszuführen, wenn es auf einem Computer abläuft.

6. Ein von einem Computer lesbares Medium, das das Computerprogramm nach Anspruch 5 speichert.

## Revendications

1. Procédé d'utilisation d'un ordinateur pour collecter une information pour une base de données de programmes (76) pour une utilisation au niveau de la planification d'un canal virtuel, la base de données comprenant une information de programme pour une pluralité de programmes, incluant, pour chaque programme, le temps de début de programme, une source réelle de canal ou de programme depuis laquelle le programme est disponible à cet instant de début et une information d'identification de programme, le procédé comprenant:
la réalisation de manière automatique des étapes qui suivent en séquence:
i) accès à une page web;
ii) stockage de l'adresse de moyen de localisation de ressource uniforme de page web;
iii) recherche dans la page web d'une information qui identifie un programme approprié pour une planification sur le canal virtuel et si cette information est trouvée, récupération d'une information de programme pour le programme et addition de l'information de programme à la base de données de programmes;
iv) identification d'un lien hypertexte depuis la page web jusqu'à une nouvelle page web ou s'il n'y en a pas, retour à une page web précédente jusqu'à ce qu'un lien sur une nouvelle page web soit trouvé; et
v) accès à la nouvelle page web et répétition des étapes (ii) à (iv).

2. Procédé selon la revendication 1, comprenant en outre la fourniture d'une pluralité de liens sur des pages web prédéterminées de manière à présenter des données de guide de programme électronique (EPG) ou des liens sur des données EPG.

3. Procédé selon la revendication 2, comprenant un accès aux pages web prédéterminées de manière à présenter des données de guide de programme électronique (EPG) ou des liens sur des données EPG avant d'accéder à d'autres pages web.

4. Procédé selon la revendication 1 ou 2, comprenant la recherche de pages web prédéterminées de manière à présenter des données de guide de programme électronique (EPG) ou des liens sur des données EPG selon une profondeur limitée.

5. Programme d'ordinateur pour, lorsqu'il est déroulé sur un ordinateur, réaliser le procédé selon l'une quelconque des revendications 1 à 4.

6. Support lisible par ordinateur qui stocke le programme d'ordinateur selon la revendication 5.
